# EUROPEAN PATENT SPECIFICATION

(11) **EP 1 072 378 B1**
(45) Date of publication and mention of the grant of the patent: **27.11.2002**
(21) Application number: 99500125.2
(22) Date of filing: 23.07.1999
(51) Int. Cl.: B29C 45/00

(54) **Moulds for containers with handles**
Formen für Behälter mit Henkel
Moules pour récipients avec anse

(43) Date of publication of application: 31.01.2001
(73) Proprietor: Garcia Leal, Jose Antonio, 30169 San Gines (Murcia) (ES)
(72) Inventor: Garcia Leal, Jose Antonio, 30169 San Gines (Murcia) (ES)
(74) Representative: Perez Bonal, Bernardo

(56) References cited:
- EP-A- 0 308 679
- EP-A- 0 924 044
- GB-A- 2 168 238
- US-A- 4 114 849
- US-A- 4 125 246
- US-A- 4 172 577

## Description

### OBJECT OF THE INVENTION

The present invention consists of a mold for containers with handles and the containers built with it, from among the split molds which allow to inject the containers with their corresponding handles.

The invention is characterised by a special construction of the mold in two separate coplanar horizontal parts, which internally incorporate the conventional countermold, with the upper half part assisted by two pairs of mirror-image parts on opposite ends of a diameter and guided by a common lower support, and opened by a radial retraction of the former on the latter, as well as having its bases coplanar with this upper part and in contact with the lower one.

Alternatively, these double pairs of parts can be replaced by others whose pairs consist of dislike members, and are respectively part of the upper and lower part of the mold, meeting these at a 45° angle with respect to the vertical axis.

Both constructions allow to inject the handle simultaneously and leave it operational by simply twisting and snapping of the small connection to the rest of the injection, in different finishes for the handle ends, according to these described alternatives.

### BACKGROUND OF THE INVENTION

It is known in the State of the Art the patent US 4114849, where is described a pivot mold assembly where the upper part of said mold is provided with two pairs of parts which are mirror images of each other and placed symmetrically opposite each other but they lack of a common lower support which guide such parts to a retraction stop. The objective is to get a mold for containers with handles which sloves the previously mentioned drawbacks.

Containers with handles made from plastic of many different sizes and for a large number of applications are well known and require no further explanation, sufficing to indicate that they incorporate the handle in a perimetral outer lip next to the opening and in respective lower orifices at diametrically opposite ends of this lip, which is constructed independently, in the same material and color as the pail, or in any other material or color, then proceeding to assembly by hand or in an automated process depending on production.

This need to join the pail to the handle requires the presence of a human worker, either permanently for manual assembly or for large periods in an automated assembly, to revise the alignment of the handles and their incorporation in the containers.

Some of these are presently constructed by simultaneously injecting the pail and the handle, the latter with corresponding small, short snap-off links which join the inner surface of the end of the handle to the nearest point on the outer surface of the pail, such as in the "Plastic container with swivelling handle of the same material", EP 0298930 by CASONE S.p.A.

This type of construction implies the use of large molds, which affects the machinery and the cost of the mold materials, which consists of two semicylindrical caps symmetrically placed about their axial plane, somewhat troncoconical in shape in order to simplify withdrawal of the countermold in a finishing for the containers which must make this withdrawal possible, so that these containers do not have a lip but rather a number of annular reinforcements aligned vertically near the pail opening, so that the edges of the line of union of the two identical parts of the mold coincide with the axis of revolution of the handle, so that it is possible to simultaneously inject it with the pail, in a handle finish which must have an angled end.

The applicant is not aware of any molds for containers with a handle in an arrangement which is orthogonal to the described one, that is, a lower mold for the entire lower base of the pail, up to the line of insertion of the upper lip, and another upper mold which forms the lip, so that any conventional mold for pails without handles may be used, to which is added the means which make this joint injection possible, just as the two different parts of the mold can be built directly for these same purposes.

### DESCRIPTION OF THE INVENTION

The invention here proposed consists of a mold for containers with handles and the containers built with it, from among the molds split in two, apart from the countermold, which make it possible to inject pails, jugs and containers in general with an upper reinforcement near the opening and simultaneously provided with their respective handles.

The invention is characterised by a special construction of the mold in two different coplanar horizontal parts, instead of the traditional symmetrical vertical parts, which include internally the conventional countermold, with the mold part placed on top, that is, the shallower one which acts as a top for the lower mold, which makes the part next to the pail opening for conventional pails without handles, being aided by two pairs of irregular trapezoidal prism-shaped mirror-image parts with a convex outer surface, which are placed on opposite ends of a diameter and are guided by a common lower support

When the mold is opened these parts carry out the opening in order to withdraw the pail by radial retraction, with their bases coplanar to this upper part and simultaneously in contact with the lower mold.

Both parts conform sectors of the annular flange with slanted converging outer walls, with their contact surface placed radially and their opposite sides also slanted.

On the inner radial side, which is the contact area of these parts, one juts out as a half cap surrounding a right-angled groove, which is complementary of an orifice of the lower mold, in order to jointly define the injection space of the angled end of the handle in its free remaining area, which shall correspond to the upper half of the pail handle, in its operational position, while the part opposite this upper mold is different from the first one only in this area, where it has a small groove which connects to the groove of the mold's annular flange, in order to inject in it and thus conform the lower slanted outlet part of the handle.

Under this bent groove of the first part is placed the large insertion orifice of the other part for support of both, also with a irregular trapezoidal shape with slanted sides with internal orifices, which is screwed to an orifice of the internal annular edge, where both parts turn back and the symmetrical parts meet, while on the innermost radial side is an rectangular prism shaped internal flange of the mold, provided with a recess which vertically meets the end of the grooved recess of the radially extractable part, by means of a recess in another inner flange similar to that of the lower mold.

The vertical part of this grooved recess has another central oval recess for inserting the spring used to extract the part.

Finally, the alternative construction to these two pairs of parts which rest on a third part is a different construction in a single piece which here belongs to both the upper and lower molds, with these two new and different parts built so that they meet and insert at an angle 45° to the vertical.

The first part is a T-shaped plate, placed with its crossbar resting on the lower base and cut obliquely at a 45° angle so that it is even with this lower area of the mold, and with the free end of its stem equally cut obliquely in a plane parallel to the other end, as well as with a grooved recess with a flange as an outer half-cap, while the internal surfaces of the bar have symmetrical orifices for insertion of springs and, finally, the outer surface of the bar has a triangular-section groove to hold the part.

The other part, also T-shaped, has its stem at a 45° angle as it is inserted at 90° to the first one and also has the surfaces of the free end of the bar cut at a 45° angle. This part shows in its visible face the other half-cap which covers the outer edge of the molding groove of the handle end, which here is straight. Finally, a semicylindrical recess is provided in one of the lateral faces of one end of a crossbar to prevent the part from slipping out.

Both alternative constructions allow to simultaneously inject the handle through the small internal connecting duct provided in the outer surface of the rectangular prism shaped flange central recess, placed on both radially opposite ends of the upper part of each mold so that, in order to make the handle operational, the small rod joining it to the rest of the injection is snapped by twisting it.

The different finishes for the handle ends, either straight or bent, depend on the alternatives described for arranging the retractable parts of the mold both in the part for the opening and in their body.

### DESCRIPTION OF THE DRAWINGS

In order to complement the description being made and to aid a better understanding of the characteristics of the invention, attached to the preset descriptive memory and as an integral part of it are a set of drawings where for purposes of illustration and in a nonlimiting sense the following is shown:

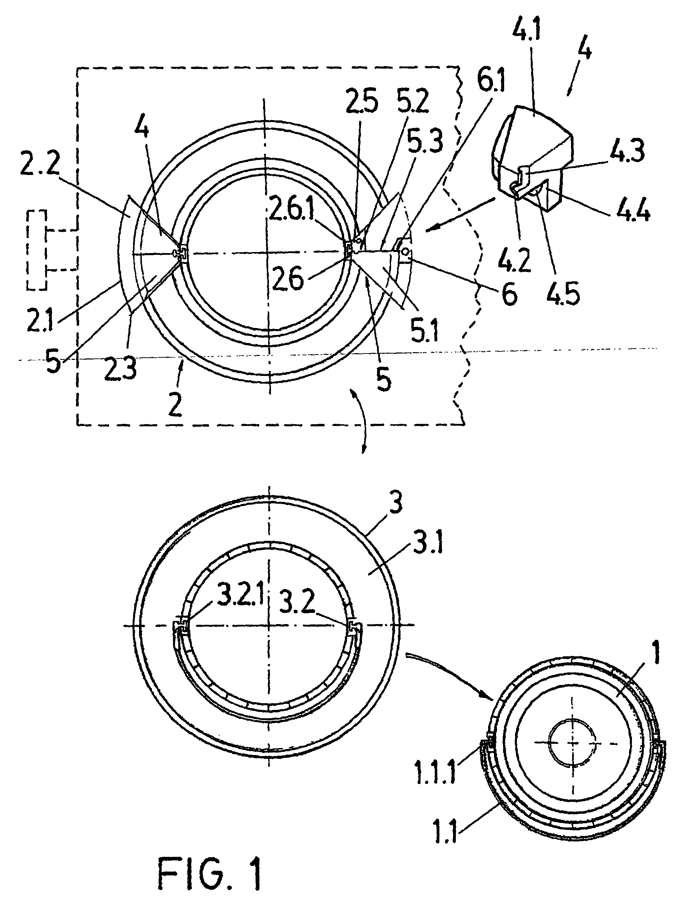

Figure 1 shows an exploded view of the pail with the two parts of the mold, without the conventional countermold and with the retractable parts of the preferred embodiment of a pail with a straight handle.

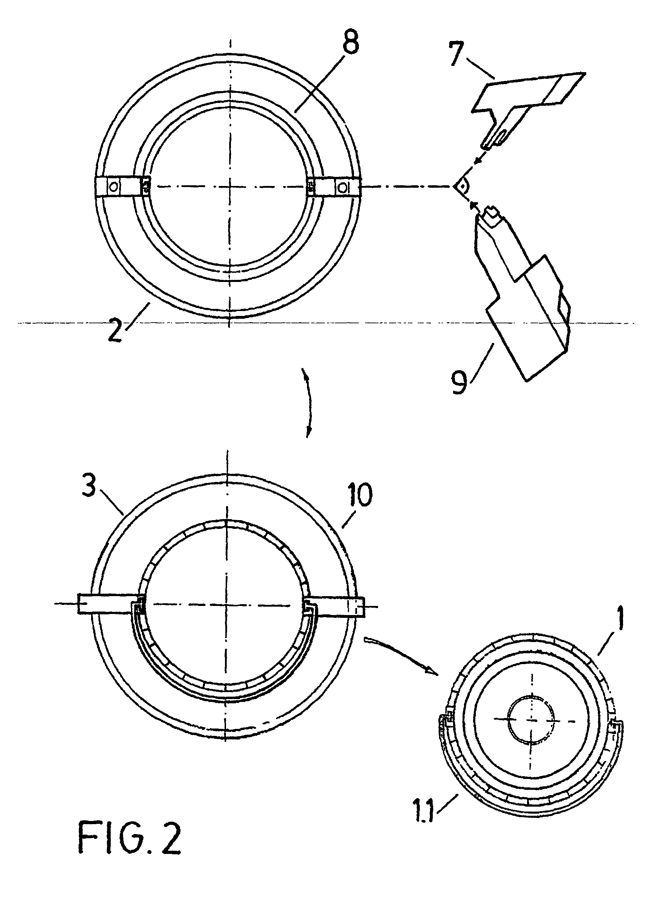

Figure 2 shows an exploded view of the alternative for the pail with the two parts of the mold, without the conventional countermold and with the retractable parts of the preferred embodiment of a pail with a bent handle.

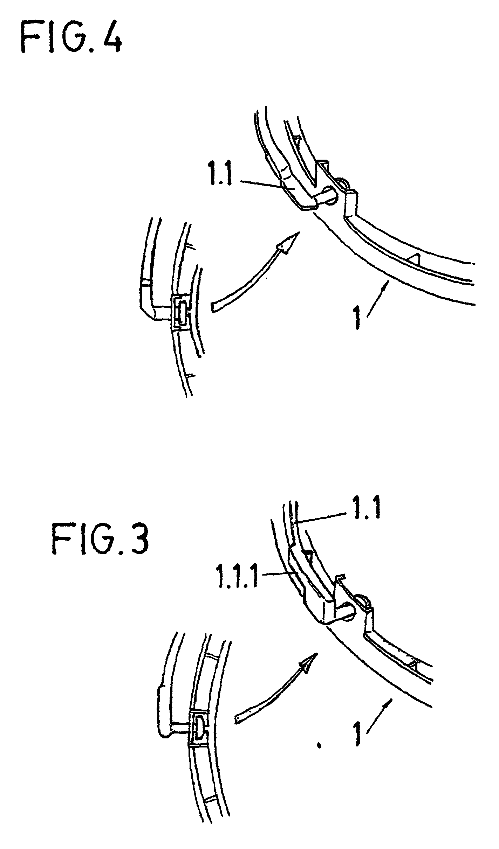

Figure 3 shows the different views of the retractable parts of the pail of figure 1.

Figure 4 shows the different views of the retractable parts of the pail of figure 2.

### PREFERRED EMBODIMENT OF THE INVENTION

In view of the above, the present invention relates to a mold for containers with handles and the containers built with it, from among molds split in two, apart form the conventional countermold, so that pails (1) can be injected through its lower base, or similar containers reinforced at their top near their opening and simultaneously provided with their corresponding handles (1.1), essentially characterised by a construction of a joint mold for pail (1) and handle (1.1) instead of the traditional construction with two mold parts symmetrical with respect to their vertical axis plane, with two different horizontal coplanar parts, an upper part (2) and a lower one (3), from a perspective of the use of the pail and not of the injection of plastic, either with a new mold or by adapting an existing conventional mold from among the molds used for construction only of pails (1).

The part of upper mold (2), that is, the shallower one, is provided with two pairs of parts (4) and (5) which are mirror images of each other, placed diametrically opposite each other and guided by a common lower support (6) to the retraction stop (2.1) of recess (2.2) in dove-tail (2.3) with a curved end edge, so that pail (1) with handle (1.1) is withdrawn by radial retraction; as well as having their bases (4.1) and (5.1) coplanar to flange (2.4) of upper mold (2) and in contact with flange (3.1) of lower mold (3).

Part (4) ends in a half-cap flange which surrounds a right-angled groove (4.3) which is complementary to a conventional recess of the lower mold (3) which conforms the rest of the handle, while symmetrical part (5) is provided with a small slanted notch (5.2) which matches groove (3.2) which partially surrounds annular flange (3.1) of mold (3), in order to conform in it the upper half of handle (1.1) by injecting plastic in it, at broadening (1.1.1) of handle (1.1).

A large recess (4.4) and (5.3) allows to insert part (6) between parts (4) and (5), on which these two bear, also of an irregular trapezoidal shape with slanted sides (6.1) with angular recesses and screwed onto recess (2.5) of annular flange (2.4), opposite a rectangular prism shaped flange (2.6), with a recess (2.6.1), complementary of another recess (3.2.1) in the equivalent internal recess (3.2) of the lower mold (3), which allow to join pail (1) in a single piece with handle (1.1) which can become a meeting point for the different materials or colours of the injection when this is performed at more than one point.

An oval central recess (4.5) allows to insert a conventional spring in order to extract the unit.

A different construction employs a single retractable part (7) in a different upper mold (8), and another retractable part (9) in the lower mold (10) which are different from each other and meet and are inserted in molds (8) and (10) at a 45° angle to the vertical.

Part (7) is a T-shaped plate with its crossbars placed on the lower base and cut at a 45° angle so that they are even on the outside with the lower area of the mold, and with the free end of the stem also cut at an angle in a parallel plane to the other cut, as well as provided with a bent recess and having an outer half-cap flange, while the inner faces of the crossbar have symmetrically placed orifices for inserting the corresponding springs and, finally, the outer face of the crossbar has a triangular section recess to prevent the part from slipping out.

The other part, also T-shaped, has its stem at a 45° angle as it is rotated 90° with respect to the first one and the faces of the free ends of the crossbar are cut at a 45° angle. The outer surface of this part shows the other half-cap which covers the outer edge of the molding recess of the handle end, which in this case is straight. Finally, a semicylindrical recess of one of the lateral faces of a crossbar is made in order to prevent the part from slipping out.

Both constructions allow to inject the handle simultaneously through the small internal connecting conduct made in the outer face of the rectangular prism shaped flange with a central recess located at both radially opposite ends of the upper part of each mold, so that, in order to make the handle operational the small rod which connects it to the rest of the injection is snapped by turning it.

The different finishings for the handle ends, either straight or bent, depend on the alternatives described for arranging the retractable mold parts, both in the mold opening and in each of their bodies.

The injection is performed quite easily, through the injection point which corresponds to the centre of the bottom of the pail or other similar container, which extends radially to the handle, or doubly, by in addition to this first injection performing at least one more injection in the same or a different material or color through orifices in the mold which reach the handle.

The essence of this invention is unaffected by variations in the materials, shape, size and arrangement of its composing elements, described in a nonlimiting manner, so that it may be reproduced by an expert in the field.

## Claims

1. Mold split into two parts, for containers with handles, suitable for injection through the lower base of pails (1), with an upper reinforcement near their opening and simultaneously provided with the corresponding handles (1.1), the pail (1) and handle (1.1) being constructed at the same time, the mould having two different horizontal coplanar parts, an upper part (2) and a lower one (3), wherein upper and lower refer to the use of the pail. The upper mold (2) part being provided with two pairs of parts (4) and (5) which are mirror images of each other, placed diametrically opposite each other, **characterised in that** both parts (4) and (5) are guided by a common lower support (6) to the retraction stop (2.1) of recess (2.2) in dove-tail (2.3) with a curved edge in its end, so that pail (1) with handle (1.1) is withdrawn by radial retraction; as well as their bases (4.1) and (5.1) are coplanar to flange (2.4) of upper mold (2) and in contact with flange (3.1) of lower mold (3).

2. Mold for containers with handles, as in claim 1, **characterised in that** part (4) ends in a half-cap flange which surrounds a right-angled groove (4.3) which is complementary to a conventional recess of the lower mold (3) which conforms the rest of the handle, while symmetrical part (5) is provided with a small slanted notch (5.2) which matches groove (3.2) which partially surrounds annular flange (3.1) of mold (3), in order to conform in it the upper half of handle (1.1) by injecting plastic in it, at a broadening (1.1.1) of handle (1.1).

3. Mold for containers with handles, as in claim 1, **characterised in that** the parts (4) and (5) have a large recess (4.4) and (5.3) which allows to insert part (6) between said parts (4) and (5), on which these two rest, also of an irregular trapezoidal shape with slanted sides (6.1) with angular recesses, and screwed onto recess (2.5) of annular flange (2.4), opposite a rectangular prism-shaped flange (2.6), with a recess (2.6.1), which is complementary of another recess (3.2.1) in the equivalent internal recess (3.2) of the lower mold (3), which allows joining pail (1) to handle (1.1) as a single piece.

4. Mold for containers with handles, as in claim 1, **characterised in that** the union of pail (1) and its handle (1.1) as a single piece is at the meeting point of the different materials or colors of the injection when it is performed at more than one point.

5. Mold for containers with handles, as in claim 1, **characterised in that** a central oval recess (4.5) allows inserting a conventional spring in order to extract the piece.

6. Mold for containers with handles, as in claim 1, **characterised in that** altenatevily to parts (4) and (5) is employed a single retractable part (7) in an upper mould (8) and another retractable part (9) in lower mold (10) which are different from each other, and which meet each other and are inserted in molds (8) and (10) at a 45° angle with respect to their vertical axis.

7. Mold for containers with handles, as in claim 6, **characterised in that** piece (7) is a T-shaped plate with its crossbars placed on the lower base and cut at a 45° angle so that they are even on the outside with the lower area of the mold, and with the free end of the stem also cut at an angle in a parallel plane to the former, as well as provided with a bent recess and having an outer half-cap flange, while the inner faces of the crossbar have symmetrically placed orifices for inserting the corresponding springs and, finally, the outer face of the crossbar has a triangular section recess to prevent the part from slipping out.

8. Mold for containers with handles, as in claim 7, **characterised in that** the other part, also T-shaped, has its stem at a 45° angle as it is rotated 90° with respect to the first one and the faces of the free ends of the crossbar are cut at a 45° angle, with the outer surface of this part showing the other half-cap which covers the outer edge of the molding recess of the handle end, which in this case is straight, while a semicylindrical recess of one of the lateral faces of a crossbar is made in order to prevent the part from slipping out.

9. Mold for containers with handles, as in claim 1 and 6 **characterised in that** both constructions allow to inject the handle simultaneously through the small internal connecting conduct made in the outer face of the rectangular prism shaped flange with a central recess located at two radially opposite ends of the upper part of each mold, so that, in order to make the handle operational the small rod which connects it to the rest of the injection is snapped by twisting it.

10. Mold for containers with handles, as in claim 9, **characterised in that** the different finishings for the handle ends, either straight or bent, depend on the alternatives described for arranging the retractable mold parts, both in the mold opening and in each of their bodies.

## Patentansprüche

1. Zweigeteilte Form für Behältnisse mit Henkeln, geeignet für das Einspritzen von Eimern (1) durch die Unterseite. Nah der Öffnung ist die Oberseite verstärkt und gleichzeitig sind entsprechende Henkel (1.1) vorgesehen. Der Eimer (1) und der Henkel (1.1) werden gleichzeitig hergestellt. Die Form verfügt über zwei unterschiedliche horizontale Teile auf der gleichen Ebene, ein oberes Teil (2) und ein unteres Teil (3), wobei sich oben und unten auf die Benutzung des Eimers beziehen. Das obere Teil (2) der Form hat zwei Teile (4) und (5), die jeweils spiegelbildlich sind und sich diametral gegenüber liegen, weil sowohl das Teil (4) als auch das Teil (5) in einem gemeinsamen unteren Auflager (6) bis zum Retraktionsanschlag (2.1) der Vertiefung (2.2) schwalbenschwanzförmig (2.3) geführt werden, wobei der seitliche Rand gebogen ist, damit der Eimer (1) mit dem Henkel (1.1) durch eine Radialretraktion entnommen werden kann. Auch die Grundflächen (4.1) und 5.1) befinden sich auf der gleichen Ebene hinsichtlich der Sieke (2.4) der oberen Form (2) und befinden sich in Kontakt mit der Sieke (3.1) der unteren Form (3).

2. Zweigeteilte Form für Behältnisse mit Henkeln wie unter 1, wobei das Teil (4) in einer Sieke in Form einer halben Kappe, die einen Schlitz umläuft, der einen rechten Winkel (4.3) bildet, der zusätzlich zu der konventionellen Vertiefung der unteren Form (4.3), die den Rest des Henkels ausmacht, besteht. Hingegen ist das symmetrische Teil (5) mit einer kleinen schrägen Kerbe (5.2) versehen, die auf den Schlitz (3.2) trifft, der zum Teil die ringförmige Sieke (3.1) der Form (3) umläuft, um so die obere Hälfte des Henkels (1.1) zu bilden, indem durch eine Verdickung (1.1.1) des Henkels (1.1) Plastik eingespritzt wird.

3. Zweigeteilte Form für Behältnisse mit Henkeln wie unter 1, wobei die Teile (4) und (5) über eine grosse Vertiefung (4.4) und (5.3) verfügen, die es ermöglicht, das Teil (6) zwischen die genannten Teile (4) und (5) einzufügen, auf dem diese beiden liegen. Dieses Teil hat auch die Form eines unregelmässigen Trapezoids, dessen gegenüberliegende Seiten (6.1) über runde Vertiefungen verfügen. Es wird auf die Vertiefung (2.5) der runden Sieke (2.4) gegenüber der Sieke in Form eines Vierecksprismas (2.6) geschraubt, die auch über eine Vertiefung (2.6.1) verfügt, die auf eine andere Vertiefung (3.2.1) innerhalb der entsprechenden internen Vertiefung (3.2) der unteren Form (3) trifft, um so den Eimer (1) und den Henkel (1.1) zu einem einzigen Stück zusammenzufügen.

4. Zweigeteilte Form für Behältnisse mit Henkeln wie unter 1, wobei die Verbindung zwischen Eimer (1) und Henkel (1.1) zu einem Ganzen an der Verbindung verschiedener Einspritzmaterialien oder Farben besteht, wenn an mehr als einem Punkt geformt wird.

5. Zweigeteilte Form für Behältnisse mit Henkeln wie unter 1, wobei die zentrale ovale Vertiefung (4.5) es ermöglicht, eine konventionelle Feder einzuführen, um das Teil herauszuziehen.

6. Zweigeteilte Form für Behältnisse mit Henkeln wie unter 1, wobei entweder das Teil (4) oder (5) als einziges herausziehbares Element (7) in einer oberen Form benutzt werden und ein anderes herausziehbares Element (9) in einer unteren Form (10). Beide Elemente sind unterschiedlich, treffen aufeinander und werden in die Formen (8) und (10) eingeführt, wobei sie einen Winkel von 45° zu ihrer vertikalen Achse bilden.

7. Zweigeteilte Form für Behältnisse mit Henkeln wie unter 6, wobei das Element (7) eine T-förmige Platte ist, deren Verankerungsschwellen auf der Grundfläche befestigt sind und in einem Winkel von 45° geschnitten sind. Auf diese Weise treffen sie ausserhalb auf die Innenfläche der Form und die freie Seite des auch geschnittenen Schafts und bilden einen Winkel parallel zu dem anderen. Ausserdem verfügt das Element über eine gebogene Vertiefung mit einer Aussensieke in Form einer halben Kappe, während die Innenseiten der Verankerungsschwelle Öffnungen haben, die symmetrisch angeordnet sind, um die entsprechenden Federn einführen zu können. Die Aussenseite der Verankerungsschwelle verfügt über eine eine dreieckig geschnittene Vertiefung, damit das Element nicht herausrutscht.

8. Zweigeteilte Form für Behältnisse mit Henkeln wie unter 7, wobei der Schaft des anderen auch T-förmigen Teils einen Winkel von 45° bildet, wenn er hinsichtlich des ersten Schafts um 90° gedreht wird und die äusseren freien Seiten der Verankerungsschwelle schneiden sich im 45°-Winkel, wobei die Aussenseite dieses Elements die andere halbe Kappe zeigt, die den Aussenrand der Vertiefung der Henkelform säumt, die in diesem Fall gerade verläuft. Eine Seite der Verankerungsschwelle bildet eine halbzylindrische Vertiefung, damit das Element nicht herausrutscht.

9. Zweigeteilte Form für Behältnisse mit Henkeln wie unter 1 - 6, wobei in beide Teile gleichzeitig der Henkel durch eine kleine innere Verbindungsleitung eingespritzt werden kann, die sich in der Aussenseite der Sieke in Form eines rechteckigen Prismas befindet. Auf zwei radial gegenüberliegenden Sieten des oberen Teils jeder Form befindet sich eine zentrale Vertiefung, so dass das kleine Stäbchen, dass den Henkel mit dem Rest der Einspritzung verbindet, durch Biegen abbricht, um den Henkel einsatzbereit zu machen.

10. Zweigeteilte Form für Behältnisse mit Henkeln wie unter 9, wobei die unterschiedliche Bearbeitung der Henkelseiten (rund oder gerade) von den beschriebenen Möglichkeiten abhängt, die Formteile zurückziehen zu können, sowohl in der Öffnung der Form als auch in jedem der Körper.

## Revendications

1. Moule divisé en deux parties pour conteneur à anses, approprié pour l'injection, à travers la base inférieure, de seaux (1), avec un renfort supérieur proche de son ouverture et muni simultanément d'anses correspondantes (1.1), le seau (1) et l'anse (1.1) étant construits en même temps, le moule ayant deux pièces coplanaires horizontales différentes, une pièce supérieure (2) et une pièce inférieure (3), dans lequel les parties supérieure et inférieure se réfèrent à l'utilisation du seau, la pièce du moule supérieur (2) étant munie de deux paires de pièces (4) et (5) placées en regard les unes des autres et diamétralement opposées les unes par rapport aux autres, **caractérisé en ce que** tant la pièce (4) que la pièce (5) sont guidées par un support inférieur commun (6) vers le butoir de rétraction (2.1) de la cavité (2.2) en queue d'aronde (2.3) avec un bord courbe en son extrémité, de manière que le seau (1) avec anse (1.1) soit retiré au moyen d'une rétraction radiale ; de même, leurs bases (4.1) et (5.1) sont coplanaires par rapport au rebord (2.4) du moule supérieur (2) et sont en contact avec le rebord (3.1) du moule inférieur (3).

2. Moule pour conteneurs avec anses, suivant la revendication 1, **caractérisé en ce que** la pièce (4) termine en un rebord demi-capuchon qui entoure une rainure formant un angle droit (4.3) complémentaire de la cavité conventionnelle du moule inférieur (3) qui forme le reste de l'anse, alors que la pièce symétrique (5) est pourvue d'une petite encoche inclinée (5.2) qui coïncide avec la rainure (3.2) entourant en partie le rebord annulaire (3.1) du moule (3), pour former ainsi dans celui-ci la moitié supérieure de l'anse (1.1) avec l'injection de plastique, dans un élargissement (1.1.1) de l'anse (1.1).

3. Moule pour conteneurs avec anse, suivant la revendication 1, **caractérisé en ce que** les pièces (4) et (5) ont une grande cavité (4.4) et (5.3) permettant d'insérer la pièce (6) entre lesdites pièces (4) et (5), sur laquelle reposent ces deux dernières et ayant aussi une forme trapézoïdale irrégulière avec des côtés obliques (6.1) avec des cavités angulaires, et vissée sur la cavité (2.5) du rebord annulaire (2.4) opposé au rebord en forme de prisme rectangulaire (2.6), avec une cavité (2.6.1) complémentaire d'une autre cavité (3.2.1) dans la cavité interne équivalente (3.2) du moule inférieur (3), permettant d'unir le seau (1) à l'anse (1.1) comme une seule pièce.

4. Moule pour conteneurs à anses, suivant la revendication 1, **caractérisé en ce que** l'union du seau (1) avec son anse (1.1) comme une seule pièce se trouve au point d'union de différents matériaux ou couleurs de l'injection lorsqu'elle est formée sur plus d'un point.

5. Moule pour conteneurs à anses, suivant la revendication 1, **caractérisé en ce qu'**une cavité ovale centrale (4.5) permet d'insérer un ressort conventionnel, afin d'en extraire la pièce.

6. Moule pour conteneur à anses, suivant la revendication 1, **caractérisé en ce que** les pièces (4) et (5), alternativement, sont utilisées comme une seule pièce rétractile (7) dans un moule supérieur et une autre pièce rétractile (9) dans un moule inférieur (10), différentes l'une de l'autre et se trouvant l'une avec l'autre et sont insérées dans les moules (8) et (10), en formant un angle de 45° par rapport à leur axe vertical.

7. Moule pour conteneurs à anses, suivant la revendication 6, **caractérisé en ce que** la pièce (7) est une plaque en T, ayant ses traverses d'ancrage placées sur la base inférieure et découpée en formant un angle de 45°, de manière qu'elles se trouvent en dehors avec la partie inférieure du moule, et avec l'extrémité libre de la tige découpée elle aussi en formant un angle sur un plan parallèle au précédent, étant ainsi pourvue d'une cavité coudée et avec un rebord en demi-capuchon extérieur, alors que les faces internes de la traverse d'ancrage ont des orifices placés symétriquement pour insérer les ressorts correspondants et, finalement, la face extérieure de la traverse d'ancrage a une cavité à section triangulaire, pour éviter de la pièce ne sorte.

8. Moule pour conteneur à anses, suivant la revendication 7, **caractérisé en ce que** l'autre pièce, aussi en T, a une tige qui forme un angle de 45° lorsqu'on tourne de 90° par rapport à la première et les faces des extrémités libres de la traverse d'ancrage sont coupées en formant un angle de 45°, avec la surface extérieure de cette pièce présentant l'autre demi-capuchon qui couvre le bord extérieur de la cavité de moulage de l'extrémité de l'anse, qui dans ce cas est droit, alors qu'il est réalisé une cavité demi-cylindrique de l'une des faces latérales d'une traverse d'ancrage, afin d'éviter que la pièce ne sorte.

9. Moule pour conteneurs à anses, suivant les revendications 1 et 6, **caractérisé en ce que** les deux constructions permettent d'injecter simultanément l'anse à travers du petit conduit interne de connexion réalisé sur la face extérieure du rebord en forme de prisme rectangulaire avec une cavité centrale placée sur deux extrémités radialement opposées de la pièce supérieure de chaque moule, de manière que pour faire que l'anse soit opérationnelle, la petite tige qui la connecte avec le reste de l'injection est brisée par torsion.

10. Moule pour conteneur à anses, suivant la revendication 9, **caractérisé en ce que** les différentes finitions des extrémités de l'anse, droite ou courbe, dépendent des alternatives décrites pour disposer les pièces de moule rétractiles, tant à l'ouverture du moule que dans chacun de ses corps.
